# EUROPÄISCHE PATENTANMELDUNG

(11) **EP 4 566 875 A1**
(43) Veröffentlichungstag der Anmeldung: **11.06.2025**
(21) Anmeldenummer: 23215257.9
(22) Anmeldetag: 08.12.2023
(51) Int. Cl.: B60N 2/02, B60N 2/06, B60N 2/07, B60N 2/42

(54) **ANTRIEBSMODUL, LÄNGSVERSTELLEINRICHTUNG UND FAHRZEUGSITZ**

(71) Anmelder: Adient US LLC, Plymouth, MI 48170 (US)
(72) Erfinder: QUAST, Ingo, 40477 Düsseldorf (DE); SPRENGER, Erik, 42929 Wermelskirchen (DE)
(74) Vertreter: Liedtke & Partner Patentanwälte

(57) **Zusammenfassung**

Antriebsmodul (128), das zumindest:
- eine Antriebseinheit (128.3) mit einem einzelnen Antriebsmotor (128.3.1), der eine Antriebswelle (128.3.2) mit mehreren Wellenabschnitten (128.3.2.1, 128.3.2.2) aufweist, mit mindestens einem Antriebsrad (128.1), das mit einem ersten Wellenabschnitt (128.3.2.1) bewegungsgekoppelt ist,
- mindestens ein Getriebe (128.5) und
- mindestens ein Überlastelement (128.2) umfasst, das mit einem zweiten Wellenabschnitt (128.3.2.2) bewegungsgekoppelt ist, wobei das Getriebe (128.5) den ersten Wellenabschnitt (128.3.2.1) mit dem Antriebsrad (128.1) und den zweiten Wellenabschnitt (128.3.2.2) mit dem Überlastelement (128.2) koppelt.

## Beschreibung

Die Erfindung betrifft ein Antriebsmodul für eine Längsverstelleinrichtung eines Fahrzeugsitzes sowie eine solche Längsverstelleinrichtung und einen Fahrzeugsitz.

### Stand der Technik

Eine Längsverstelleinrichtung umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, ein Antriebsmodul der eingangs genannten Art zu verbessern, insbesondere ein kompaktes Antriebsmodul mit mindestens zwei Funktionen, eine Längsverstelleinrichtung mit einem solchen verbesserten Antriebsmodul sowie einen entsprechenden Fahrzeugsitz bereitzustellen.

### Lösung

Die erstgenannte Aufgabe wird erfindungsgemäß gelöst durch ein Antriebsmodul mit den Merkmalen des Anspruchs 1. Die zweitgenannte Aufgabe wird erfindungsgemäß gelöst durch eine Längsverstelleinrichtung mit den Merkmalen des Anspruchs 10. Die drittgenannte Aufgabe wird erfindungsgemäß gelöst durch einen Fahrzeugsitz mit den Merkmalen des Anspruchs 15.

Vorteilhafte Ausgestaltungen, welche einzeln oder in Kombination miteinander eingesetzt werden können, sind Gegenstand der Unteransprüche.

Das erfindungsgemäße Antriebsmodul für eine Längsverstelleinrichtung eines Sitzes, insbesondere eines Fahrzeugsitzes, umfasst eine Antriebseinheit mit zumindest einem einzelnen Antriebsmotor, der eine Antriebswelle mit mehreren Wellenabschnitten aufweist, und mit zumindest einem Antriebsrad, das mit einem ersten Wellenabschnitt der Antriebswelle bewegungsgekoppelt ist. Das Antriebsmodul umfasst des Weiteren mindestens ein Getriebe und mindestens ein Überlastelement, das mit einem zweiten Wellenabschnitt der Antriebswelle bewegungsgekoppelt ist. Das Getriebe koppelt den ersten Wellenabschnitt mit dem Antriebsrad und den zweiten Wellenabschnitt dem Überlastelement.

Dadurch, dass das Antriebsmodul zwei Wellenabschnitte aufweist, kann dieses gegenüber dem Stand der Technik zusätzlich zum Antrieb auch noch eine Überlastfunktion sicherstellen. Mit anderen Worten: Das Antriebsmodul ist als ein Multifunktionsantriebsmodul ausgebildet, welches das mindestens eine Antriebsrad zur Bewegung der Oberschiene relativ zur Unterschiene und das mindestens eine Überlastelement zur sicheren Feststellung oder Fixierung der Oberschiene und der Unterschiene miteinander bei einer Überlast, insbesondere bei einem Unfall, umfasst.

Die Antriebseinheit kann beispielsweise als ein Zahnstangenantrieb ausgebildet sein. Das Überlastelement kann beispielsweise als eine Verriegelungsmechanik ausgebildet sein. Das Antriebsmodul kombiniert somit eine als Zahnstangenantrieb ausgebildete Antriebseinheit mit einem einzigen Antriebsmotor mit einem als Verriegelungsmechanik ausgebildeten Überlastelement. Hierdurch ist das Antriebsmodul kompakt und einfach ausgebildet und ermöglicht den Einsatz von kleinen Antriebsmotoren gegenüber den Lösungen mit bekannten Trapezspindeln und den bekannten, großen drehmomentstarken Antriebsmotoren.

Das Antriebsmodul kann insbesondere ein Gehäuse (auch Getriebegehäuse genannt) umfassen, in welchem das Getriebe angeordnet ist und an welchem zumindest teilweise außen das Antriebsrad frei beweglich und das Überlastelement frei beweglich gelagert sind. Insbesondere ragt das Überlastelement nur teilweise aus dem Gehäuse heraus. Das Antriebsrad ist demgegenüber vollständig außen beweglich am Gehäuse gelagert. Das Gehäuse kann darüber hinaus bereichsweise eine Trägerverlängerung umfassen, welche eine Auflagefläche zur Aufnahme und Anordnung des Antriebsmotors aufweist. Das Gehäuse weist insbesondere eine mit einem Gehäuseboden fluchtende Trägerverlängerung auf. Die Trägerverlängerung erstreckt sich insbesondere in Längsrichtung des Gehäuses und weg von diesem, insbesondere vom Gehäuseboden weg. Die Trägerverlängerung kann auch Gehäusebodenverlängerung genannt werden. Die Trägerverlängerung kann beispielsweise als ein Profil, insbesondere ein schalenförmiges Profil, ausgebildet sein.

Das Gehäuse kann an einer Längsseite mindestens eine erste Ausnehmung für das Antriebsrad, insbesondere ein Antriebsritzel, und mindestens eine zweite Ausnehmung für das Überlastelement aufweisen. Die erste Ausnehmung kann insbesondere eingerichtet sein, eine Antriebsschnittstelle aufzunehmen. Die Antriebsschnittstelle ist insbesondere zur formschlüssigen Verbindung mit dem Antriebsrad eingerichtet. Die erste Ausnehmung kann beispielsweise als eine Durchgangsöffnung, insbesondere ein Rundloch, ausgebildet sein, in welchem die Antriebsschnittstelle mit einem Spiel und beweglich, insbesondere drehbeweglich, gelagert ist.

Die zweite Ausnehmung kann insbesondere eingerichtet sein, ein beispielsweise als Verriegelungsschnecke ausgebildetes Überlastelement frei beweglich zu lagern. Beispielsweise kann die zweite Ausnehmung als ein Langloch, das sich in Längsrichtung des Gehäuses erstreckt, ausgebildet sein.

Zusätzlich kann das Gehäuse auf einer Oberseite mindestens eine Lagerausnehmung aufweisen. Die Lagerausnehmung kann beispielsweise zur Aufnahme und beweglichen Lagerung mindestens eines Vorspannelements, insbesondere mindestens einer Vorspannfeder, ausgebildet sein. Das Vorspannelement kann zwischen dem Gehäuseboden des Gehäuses und einer Unterseite der Oberschiene angeordnet sein. Dabei kann sich das Vorspannelement vom Gehäuseboden durch das Gehäuse hindurch und aus der Lagerausnehmung heraus in Richtung der Unterseite der Oberschiene erstrecken.

Der Antriebsmotor und das Gehäuse können beispielsweise in Längsrichtung des Antriebsmoduls und hintereinander angeordnet sein. Insbesondere können Stirnseiten des Antriebsmotors und des Gehäuses aneinandergrenzen. Dies ermöglicht einen besonders schmalen und länglichen Aufbau des Antriebsmoduls, so dass dieses vollständig innerhalb der Schienenanordnung angeordnet und verbaut sein kann.

Beispielsweise kann das Gehäuse an mindestens einer seiner Gehäusestirnwänden mindestens eine Wellenausnehmung aufweisen. Die Wellenausnehmung ist eingerichtet, die Antriebswelle mit einem Spiel aufzunehmen. Die Antriebswelle kann somit frei beweglich im Gehäuse gelagert sein.

Das Gehäuse kann darüber hinaus beispielsweise ein zentrales Drehlager umfassen. Das zentrale Drehlager kann beispielsweise als mindestens eine zentrale Lagerbuchse ausgebildet sein, die senkrecht von einer der Längsseiten des Gehäuses nach außen abragt. Die zentrale Lagerbuchse kann beispielsweise als ein ortsfester Lagerstift oder ein ortsfester Lagerbolzen ausgebildet sein, der drehbeweglich an der Oberschiene, insbesondere an den Innenseiten der Oberschiene, gelagert ist.

Das Überlastelement kann beispielsweise als ein Verriegelungselement, insbesondere als eine Verriegelungsschnecke, ausgebildet sein. Im Normalbetrieb ist das Überlastelement mit Spiel und somit ohne Verriegelungseingriff oder Sperreingriff zur Unterschiene gelagert.

Die erfindungsgemäße Längsverstelleinrichtung umfasst die zumindest eine Schienenanordnung mit einer festen Unterschiene und einer zur Unterschiene verstellbaren Oberschiene und das mindestens eine mit der Schienenanordnung koppelbares oder gekoppeltes, zuvor beschriebene Antriebsmodul. Das Antriebsmodul kann als ein Zahnstangenantrieb ausgebildet sein. Durch eine solche Ausbildung als Zahnstangenantrieb sind zusätzliche Spindelhalter und aufwendige Schweißoperationen sowie Vernieten von Spindelhaltewinkel sicher vermieden.

Darüber hinaus kann das Antriebsmodul vollständig in einem zwischen der Unterschiene und der Oberschiene gebildeten Hohlraum angeordnet und an der Oberschiene gelagert sein.

Dabei kann das Antriebsrad spielfrei in mindestens einem Zahnelement, insbesondere eine Zahnleiste mit einer Verzahnung (auch Gegenverzahnung genannt) der Unterschiene angeordnet sein. Die Gegenverzahnung kann an einer Längsseite der Unterschiene und somit in diese integriert ausgebildet sein. Alternativ kann als Verzahnung eine separate Zahnschiene an der Unterschiene angeordnet oder parallel zu dieser in Längsrichtung verlaufend angeordnet sein. Durch das in die Verzahnung eingreifende und vom Antriebsmotor angetriebene Antriebsrad, insbesondere das Antriebsritzel, kann die Oberschiene relativ zur Unterschiene bewegt und verstellt werden.

Das Überlastelement kann mit einem Spiel in mindestens einem Zahnelement der Unterschiene, insbesondere in der Verzahnung kontaktlos, angeordnet sein. Mit anderen Worten: Das Überlastelement, zum Beispiel eine Verriegelungsschnecke, steht im Normalbetrieb nicht im Kontakt mit der Verzahnung (auch Gegenverzahnung genannt) der Unterschiene. Das Überlastelement ist insbesondere als eine Schnecke ausgebildet, die in mehreren Zahnlücken der Verzahnung der Unterschiene kontaktlos angeordnet ist. Die Anzahl der genutzten Zahnlücken der Verzahnung definiert dabei insbesondere eine maximal aufnehmbare Last des Überlastelements bei einem Unfall (auch im Crash-Fall genannt) und vergrößert insbesondere eine Scherung von Schneckenzähnen des Überlastelements.

Des Weiteren kann das Gehäuse des Antriebsmoduls gegenüber der Oberschiene vorgespannt und/oder drehbar an der Oberschiene gelagert sein. Hierdurch kann sichergestellt werden, dass das Antriebsrad ohne Spiel und damit spielfrei in die Verzahnung der Unterschiene angeordnet ist.

Zusammenfassend und mit anderen Worten ausgedrückt, ist durch die Erfindung ein Antriebsmodul bereitgestellt, das eine Kombination aus einem Zahnstangenantrieb und einer Verriegelungsmechanik ermöglicht. Das Antriebsmodul kann vollständig oder komplett innerhalb der Schienenanordnung, insbesondere einer Sitzschiene (auch Oberschiene genannt), verbaut werden. Alternativ kann der Antriebsmotor außerhalb der Schienenanordnung positioniert sein, insbesondere in Abhängigkeit von der Motorleistung. Bei einem kleinen Antriebsmotor ist das Antriebsmodul vollständig in der Sitzschiene verbaut. Für eine solche Längsverstelleinrichtung mit einem solchen Antriebsmodul kann direkt eine Verzahnung, in Anlehnung an eine Zahnstange oder Zahnleiste oder Zahnprofil, in die Unterschiene eingebracht sein. Die Verzahnung kann aber auch über eine mit der Unterschiene verbundene Zahnleiste realisiert werden. Die Oberschiene kann integrierte Öffnungen, insbesondere in einer Schienenoberseite der Oberschiene, für einen Stromanschluss des in der Oberschiene innen angeordneten Antriebsmoduls, insbesondere des innen liegenden Antriebsmotors, aufweisen.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung,
- Fig. 2:: eine perspektivische Darstellung einer Schienenanordnung,
- Fig. 3:: eine teilaufgeschnittene perspektivische Darstellung der Schienenanordnung gemäß Figur 2 mit einem erfindungsgemäßen innenliegenden Antriebsmodul,
- Fig. 4:: eine perspektivische Darstellung des erfindungsgemäßen Antriebsmoduls,
- Fig. 5:: eine teilaufgeschnittene vergrößerte Seitenansicht der Schienenanordnung im Bereich des innenliegenden Antriebsmoduls,
- Fig. 6:: eine vergrößerte Seitenansicht der Schienenanordnung im Bereich des innenliegenden Antriebsmoduls mit überlagertem Kraft-/Hebel-Diagramm,
- Fig. 7:: eine teilaufgeschnittene Stirnseitenansicht der Schienenanordnung,
- Fig. 8:: eine vergrößerte Seitenansicht der Schienenanordnung im Bereich des innenliegenden Antriebsmoduls mit überlagertem Kraft-Diagramm,
- Fig. 9:: eine perspektivische Darstellung eines Getriebes des Antriebsmoduls,
- Fig. 10:: eine vergrößerte perspektivische Darstellung des Antriebsmoduls im Bereich des Antriebsrades,
- Fig. 11:: eine perspektivische Darstellung eines Abtriebsschneckenrades mit einer Antriebsschnittstelle,
- Fig. 12:: eine vergrößerte perspektivische Darstellung des Antriebsmoduls im Bereich einer Überlastmechanik mit zugehörigen Getriebestufen und Überlastelement,
- Fig. 13:: eine perspektivische Darstellung eines Getriebegliedes, umfassend ein Schneckenrad und Schnecken für den Antrieb der Überlastelemente, und
- Fig. 14:: eine Schnittdarstellung des Antriebsmoduls im Bereich des Überlastelements.

Einander entsprechende Teile sind in allen Figuren mit den gleichen Bezugszeichen versehen.

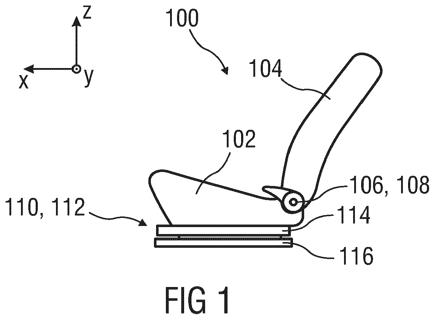

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116.

Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

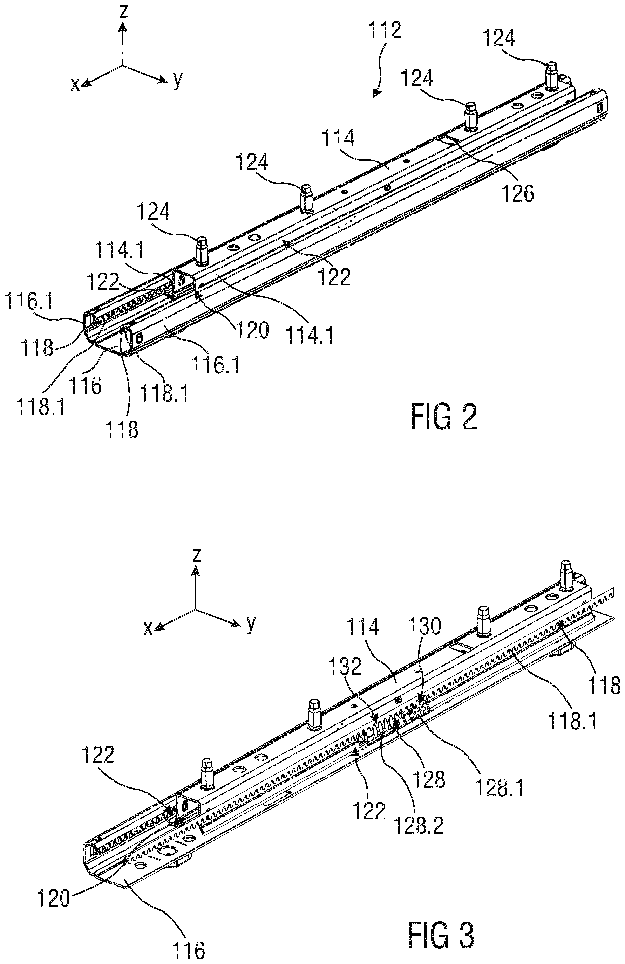

Figur 2 zeigt eine perspektivische Darstellung der Schienenanordnung 112.

Die Schienenanordnung 112 umfasst die in Längsrichtung x bewegbare Oberschiene 114 und die ortsfeste Unterschiene 116. Die beiden Schienen 114, 116 sind derart zueinander angeordnet, dass ein Hohlraum 120 zwischen diesen zumindest in einem überlappenden Bereich der beiden Schienen 114, 116 gebildet ist.

Die beiden Schienen 114, 116 sind beispielsweise als u-förmige Schienenprofile ausgebildet, die deren Längsseiten 114.1, 116.1 gegenseitig hintergreifen. Beispielsweise können Schenkelenden der Längsseiten 114.1, 116.1 der Oberschiene 114 und der Unterschiene 116 derart mindestens einfach oder mehrfach gebogen sein, dass diese einander hintergreifen.

Dabei können in Längsrichtung x gesehen zwei seitliche, innen liegende Zusammenwirkungsbereiche 122 zwischen der Unterschiene 116 und der Oberschiene 114 gebildet sein.

Mittels Befestigungselemente 124 kann die Oberschiene 114 an dem Sitzteil 102 (dargestellt in Figur 1) befestigt sein.

Darüber hinaus kann die Oberschiene 114 mindestens eine Anschlussöffnung 126 für einen nicht dargestellten Versorgungsanschluss, insbesondere einen Stromanschluss und/oder einen Leitungsanschluss, umfassen.

Für eine Längsverstellung der Oberschiene 114 relativ zur Unterschiene 116 kann ein Zahnelement 118 vorgesehen sein. Das Zahnelement 118 erstreckt sich in Längsrichtung x an einer der Innenseiten der Längsseiten 116.1 oder an beiden Innenseiten der Längsseiten 116.1 der Unterschiene 116. Mit anderen Worten: Die Unterschiene 116 umfasst einseitig oder beidseitig innen an seinen Längsseiten 116.1 jeweils ein Zahnelement 118. Insbesondere erstreckt sich das Zahnelement 118 über die gesamte Länge der Unterschiene 116.

Das Zahnelement 118 kann beispielsweise direkt an in die Unterschiene 116, insbesondere an ein nach innen gebogenes freies Schenkelende der Unterschiene 116, als eine Verzahnung 118.1 eingebracht sein. Die Verzahnung 118.1 fungiert in Art einer Zahnstange. Das Zahnelement 118 kann alternativ als eine separate Zahnleiste ausgebildet sein, die mit der Unterschiene 116 verbunden ist.

Figur 3 zeigt eine teilaufgeschnittene perspektivische Darstellung der Schienenanordnung 112 gemäß Figur 2 mit einem erfindungsgemäßen innenliegenden Antriebsmodul 128.

Das Antriebsmodul 128 ist in dem zwischen der Unterschiene 116 und der Oberschiene 114 gebildeten Hohlraum 120 angeordnet und an der Oberschiene 114 gelagert. Insbesondere ist das Antriebsmodul 128 derart ausgestaltet, dass es vollständig in dem Hohlraum 120, insbesondere vollständig in einem Schienenhohlraum der Oberschiene 114, angeordnet ist.

Das Antriebsmodul 128 umfasst zumindest ein Antriebsrad 128.1 und zumindest ein Überlastelement 128.2.

In zumindest einem oder in beiden seitlichen, innen liegenden und in Längsrichtung x sich erstreckenden Zusammenwirkungsbereich/en 122 zwischen der Unterschiene 116 und der Oberschiene 114 kann jeweils ein Antriebsrad 128.1 und ein Überlastelement 128.2 angeordnet sein.

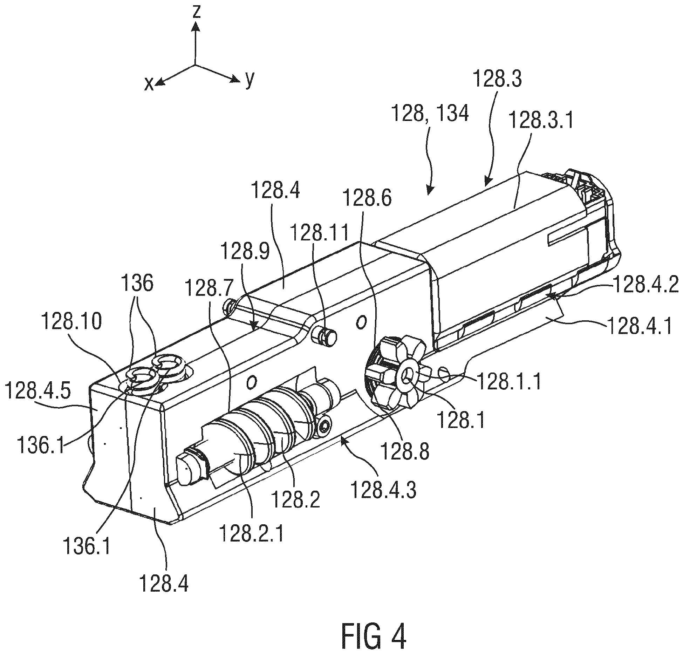

Zur Längsverstellung der Oberschiene 114 relativ zur Unterschiene 116 steht das, zum Beispiel als ein antreibbares Ritzel 128.1.1 (dargestellt in Figur 4) ausgebildete, Antriebsrad 128.1 in einem kämmenden Eingriff 130 mit dem Zahnelement 118, insbesondere mit der Verzahnung 118.1, in oder an der Unterschiene 116. Dabei greift das Antriebsrad 128.1 spielfrei, das heißt ohne ein Spiel senkrecht zur Längsrichtung x, insbesondere in Vertikalrichtung z, in die Verzahnung 118.1 (auch Gegenverzahnung genannt) ein und steht somit in Kontakt mit der Verzahnung 118.1. Dadurch wird ein sicherer kämmender Eingriff 130 von Antriebsrad 128.1 und Verzahnung 118.1 bewirkt, so dass die Oberschiene 114 relativ zur Unterschiene 116 in Längsrichtung x bewegt und verstellt werden kann. Mit anderen Worten: Durch den kämmenden Eingriff 130 wird ein freies Längsspiel vermieden. Hierzu wird das Ritzel 128.1.1 gegen das beispielsweise als Zahnstange oder Zahnleiste ausgebildete Zahnelement 118 angefedert.

Das Überlastelement 128.2 ist demgegenüber mit einem Spiel 132 in Vertikalrichtung z und in Längsrichtung x in der Verzahnung 118.1 der Unterschiene 116 angeordnet. Das heißt: Das Überlastelement 128.2 steht nicht in Kontakt mit der Verzahnung 118.1. Das Überlastelement 128.2 dient der Sicherstellung einer Überlastfunktion am Antriebsmodul 128. Das Überlastelement 128.2 dient insbesondere zur sicheren Feststellung oder Fixierung der Oberschiene 114 und der Unterschiene 116 miteinander bei einer Überlast, insbesondere bei einem Unfall. Das Überlastelement 128.2 kann beispielsweise als eine Verriegelungsschnecke 128.2.1 ausgebildet sein.

Das Antriebsmodul 128 kann primär ein oder mehrere Antriebsräder 128.1, insbesondere Antriebszahnrädern oder Ritzel 128.1.1, umfassen. Beispielsweise kann das Antriebsmodul 128 zwei Antriebsräder 128.1 umfassen, die einander gegenüberliegend und zueinander beabstandet sind. Die beiden Antriebsräder 128.1 stehen in den einander gegenüberliegenden Zusammenwirkungsbereichen 122 jeweils mit den Verzahnungen 118.1 an der Unterschiene 116 im kämmenden Eingriff 130.

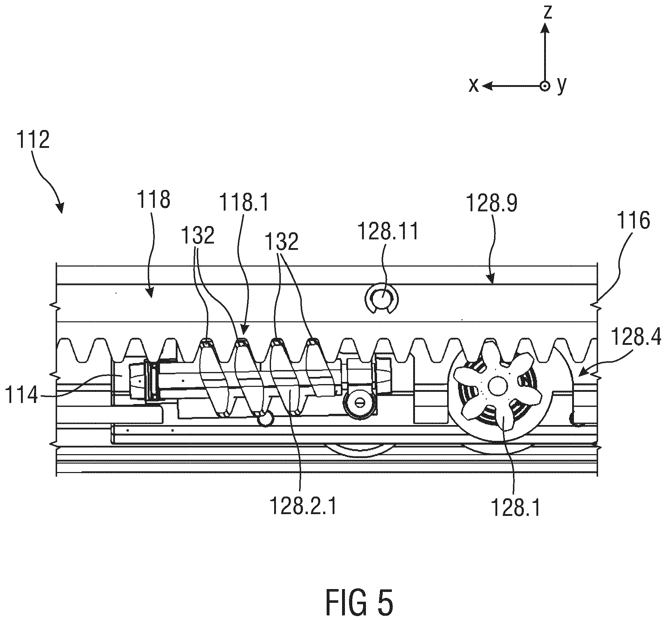

Das Antriebsmodul 128 kann des Weiteren ein oder mehrere Überlastelemente 128.2, insbesondere zwei Verriegelungsschnecken 128.2.1, umfassen. Beispielsweise können die Verriegelungsschnecken 128.2.1 einander gegenüberliegend und zueinander beabstandet sein. Die beiden Verriegelungsschnecken 128.2.1, insbesondere deren schraubenförmige Schnecke, sind in den einander gegenüberliegenden Zusammenwirkungsbereichen 122 jeweils in den Verzahnungen 118.1 an der Unterschiene 116 mit einem Spiel 132 angeordnet, wie in Figur 5 im Detail gezeigt.

Figur 4 zeigt eine perspektivische Darstellung des erfindungsgemäßen Antriebsmoduls 128. Das Antriebsmodul 128 ist als ein Multifunktionsantriebsmodul ausgebildet, das mindestens das eine Antriebsrad 128.1 zur Längsverstellung und das mindestens eine Überlastelement 128.2 zur Sicherstellung der Überlastfunktion umfasst.

Das Antriebsmodul 128 umfasst eine Antriebseinheit 128.3 mit zumindest einem einzelnen Antriebsmotor 128.3.1. Die Antriebseinheit 128.3 kann beispielsweise als ein Zahnstangenantrieb ausgebildet sein. Das Überlastelement 128.2 kann beispielsweise als eine Verriegelungsmechanik ausgebildet sein.

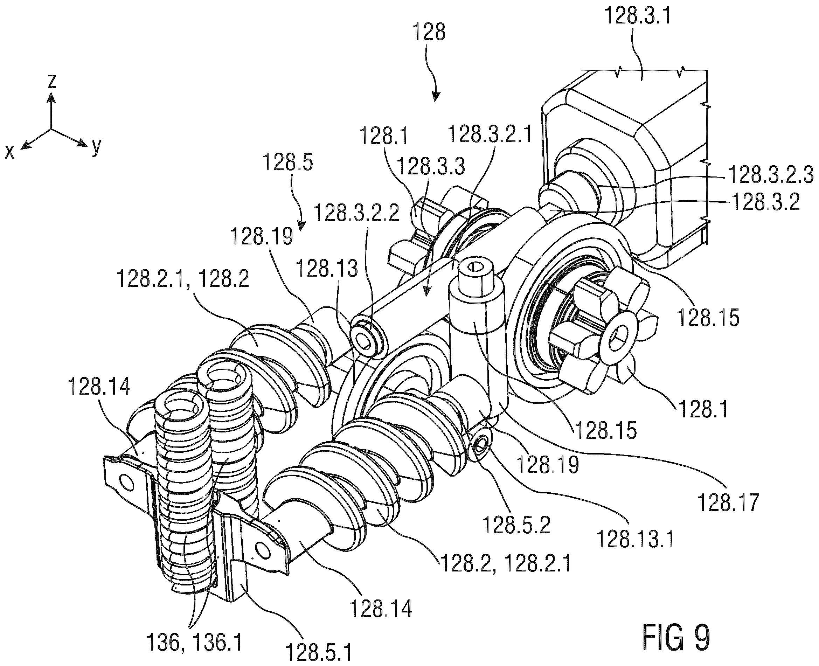

Das Antriebsmodul 128 umfasst zumindest die Antriebseinheit 128.3 mit dem Antriebsmotor 128.3.1 und dem zumindest einen Antriebsrad 128.1, zumindest ein Getriebe 128.5 (dargestellt in Figur 9) und das zumindest eine Überlastelement 128.2 sowie ein Gehäuse 128.4, in welchem zumindest das Getriebe 128.5 angeordnet ist. Alle Komponenten des Antriebsmoduls 128 können zu einem Vormontagemodul 134 vormontiert werden.

Das Antriebsmodul 128 kombiniert die als Zahnstangenantrieb ausgebildete Antriebseinheit 128.3 mit dem einzigen Antriebsmotor 128.3.1 mit dem beispielsweise im Überlastfall als Verriegelungsmechanik wirkenden Überlastelement 128.2.

An dem Gehäuse 128.4 ist zumindest teilweise außen sowohl das Antriebsrad 128.1 als auch das Überlastelement 128.2 frei beweglich gelagert. Insbesondere ragt das beispielsweise als längliche Verriegelungsschnecke 128.2.1 ausgebildete Überlastelement 128.2 nur teilweise aus dem Gehäuse 128.4 heraus. Das beispielsweise als antreibbares Ritzel 128.1.1 ausgebildete Antriebsrad 128.1 ist demgegenüber vollständig außen beweglich am Gehäuse 128.4 gelagert.

Das Gehäuse 128.4 kann darüber hinaus bereichsweise eine Trägerverlängerung 128.4.1 umfassen, welche eine Auflagefläche 128.4.2 zur Aufnahme und Anordnung des Antriebsmotors 128.3.1 aufweist.

Die Trägerverlängerung 128.4.1 ist insbesondere fluchtend zu einem Gehäuseboden 128.4.3 angeordnet. Die Trägerverlängerung 128.4.1 erstreckt sich insbesondere in Längsrichtung x des Gehäuses 128.4 und weg von diesem, insbesondere weg vom Gehäuseboden 128.4.3. Die Trägerverlängerung 128.4.1 kann auch Gehäusebodenverlängerung genannt werden. Die Trägerverlängerung 128.4.1 ist beispielsweise als ein Profil, insbesondere ein schalenförmiges Profil, ausgebildet.

Das Gehäuse 128.4 kann mehrteilig, insbesondere zweiteilig, zum Beispiel aus zwei zusammengesetzten Gehäusehälften 128.4.4 und 128.4.5, gebildet sein.

Das Gehäuse 128.4 kann an einer Längsseite mindestens eine erste Ausnehmung 128.6 für das Antriebsrad 128.1 und mindestens eine zweite Ausnehmung 128.7 für das Überlastelement 128.2 aufweisen.

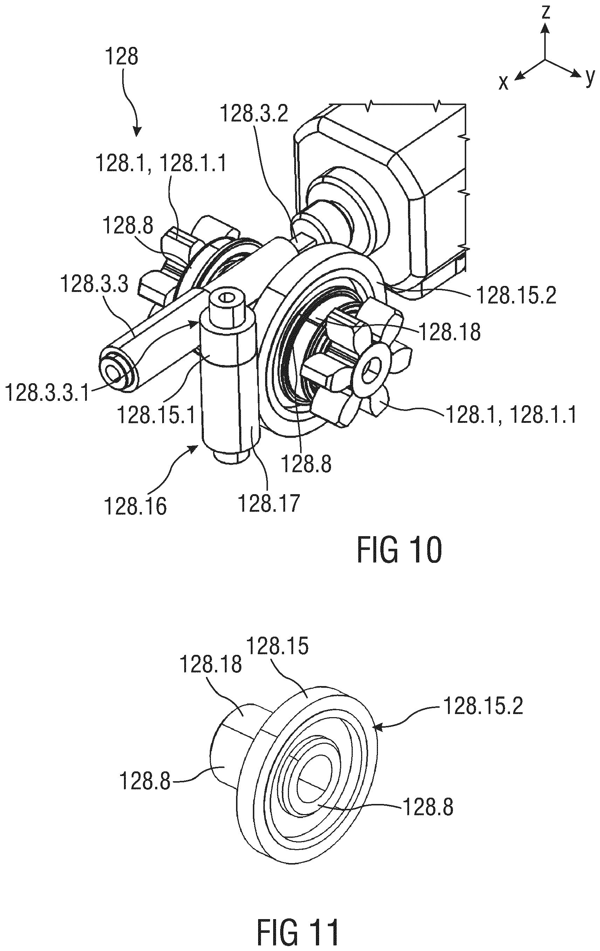

Die erste Ausnehmung 128.6 kann insbesondere eingerichtet sein, eine Antriebsschnittstelle 128.8 aufzunehmen. Die Antriebsschnittstelle 128.8 (auch in Figur 11 gezeigt) ist insbesondere zur formschlüssigen Verbindung mit dem Antriebsrad 128.1 eingerichtet. Die erste Ausnehmung 128.6 kann beispielsweise als eine Durchgangsöffnung, insbesondere ein Rundloch, ausgebildet sein, in welchem die Antriebsschnittstelle 128.8 mit einem Spiel und beweglich, insbesondere drehbeweglich, gelagert ist.

Die zweite Ausnehmung 128.7 kann insbesondere eingerichtet sein, dass beispielsweise als Verriegelungsschnecke 128.2.1 ausgebildete Überlastelement 128.2 frei beweglich zu lagern. Beispielsweise kann die zweite Ausnehmung 128.7 als ein Langloch ausgebildet sein, das sich in Längsrichtung x des Gehäuses 128.4 erstreckt.

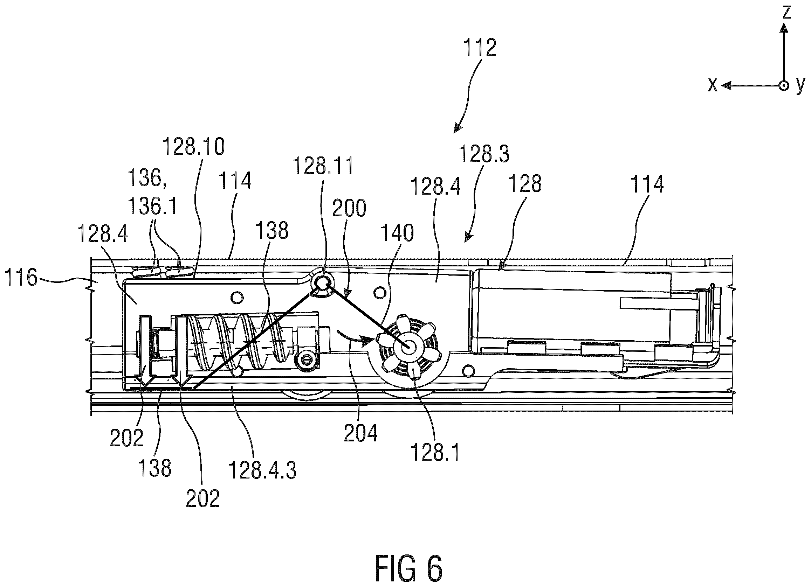

Zusätzlich kann das Gehäuse 128.4 auf einer Oberseite 128.9 mindestens eine Lagerausnehmung 128.10 aufweisen. Die Lagerausnehmung 128.10 kann beispielsweise zur Aufnahme und beweglichen Lagerung mindestens eines Vorspannelements 136, insbesondere mindestens einer Vorspannfeder 136.1, ausgebildet sein. Das Vorspannelement 136 kann zwischen dem Gehäuseboden 128.4.3 des Gehäuses 128.4 und einer Unterseite der Oberschiene 114 angeordnet sein, wie in Figur 6 dargestellt.

Der Antriebsmotor 128.3.1 und das Gehäuse 128.4 für das Getriebe 128.5 können sich beispielsweise in Längsrichtung x des Antriebsmoduls 128 und hintereinander angeordnet sein. Insbesondere können Stirnseiten des Antriebsmotors 128.3.1 und des Gehäuses 128.4 aneinandergrenzen. Insbesondere sind die Stirnseiten korrespondierend zueinander ausgebildet, so dass diese aneinander liegen.

Darüber hinaus können ein Gehäuse des Antriebsmotors 128.3.1 und das Gehäuse 128.4 jeweils an ihren zueinander angeordneten Gehäusestirnwänden eine Wellenausnehmung 128.3.2.3 (beispielhaft für die Gehäusestirnwand des Antriebsmotors 128.3.1 in Figur 9 dargestellt) aufweisen.

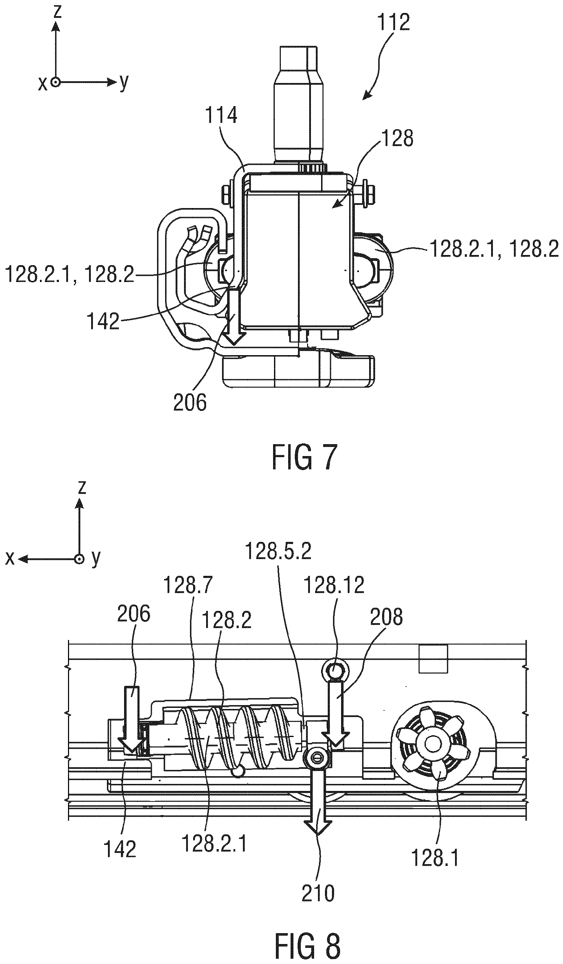

Das Gehäuse 128.4 kann darüber hinaus beispielsweise ein zentrales Drehlager 128.11 umfassen. Das zentrale Drehlager 128.11 kann beispielsweise als mindestens eine zentrale Lagerbuchse 128.12 (dargestellt in Figur 8) ausgebildet sein, die senkrecht von einer der Längsgehäuseseiten des Gehäuses 128.4 nach außen abragt. Die zentrale Lagerbuchse 128.12 kann beispielsweise als ein ortsfester Lagerstift oder ein ortsfester Lagerbolzen ausgebildet sein, der drehbeweglich an der Oberschiene 114, insbesondere an Innenseiten der Oberschiene 114, gelagert ist.

Das Antriebsmodul 128 ist in Figur 4 mit den wesentlichen von außen erkennbaren Komponenten, den Vorspannelementen 136, den Überlastelementen 128.2, dem Antriebsrad 128.1 und dem Antriebsmotor 128.3.1 im montierten Zustand als Vormontagemodul 134 dargestellt. Der Antriebsmotor 128.3.1 treibt über innenliegende Getriebekomponenten (in Figur 9 dargestellt) das Antriebsrad 128.1 oder die Antriebsräder 128.1 (auch Antriebszahnrad/Antriebszahnräder genannt) an. Ferner wird/werden über weitere Getriebekomponenten die Verriegelungsschnecke/n 128.2.1 angetrieben. Eine Getriebeübersetzung ist hierbei so gewählt, dass die in den Zahnlücken der Verzahnung 118.1 (dargestellt in Figur 3) des Zahnelements 118 (dargestellt in Figur 3) liegende Verriegelungsschnecke 128.2.1 mit der gleichen in x gerichteten Geschwindigkeit bewegt wird, wie das Antriebsrad 128.1. So kann sichergestellt werden, dass die Verriegelungsschnecke 128.2.1 bei Normalbetrieb der Oberschiene 114 (dargestellt in Figur 3) nie in Kontakt mit der Verzahnung 118.1 kommt. Diese Verriegelungsschnecke 128.2.1 kann ausschließlich für hohe Lasten im Falle eines Unfalls vorgehalten sein und in einen Sicherheitseingriff zum Sperren der Oberschiene 114 mit der Unterschiene 116 (dargestellt in Figur 3) bei einem Unfall vorgesehen sein.

Das Gehäuse 128.4 kann beispielsweise ein Metallgehäuse oder auch ein metallverstärktes Kunststoffgehäuse sein. Die Vorspannfedern 136.1 dienen insbesondere für einen Anpressdruck des Antriebsrads 128.1 oder der Antriebsräder 128.1, damit diese in einem spielfreien und somit kämmenden Eingriff 130 mit der Verzahnung 118.1 zur Längsverstellung der Oberschiene 114 relativ zur Unterschiene 116 gelangen, wie in Figur 3 gezeigt.

Figur 5 zeigt eine teilaufgeschnittene vergrößerte Seitenansicht der Schienenanordnung 112 im Bereich des innenliegenden Antriebsmoduls 128.

Das Drehlager 128.11 ist an den Gehäuselängsseiten mittig und unterhalb der Oberseite 128.9 des Gehäuses 128.4 angeordnet.

Das Antriebsrad 128.1 ist spielfrei in die Verzahnung 118.1 gedrückt. Die Verriegelungsschnecke 128.2.1 ist mit dem Spiel 132, insbesondere in Vertikalrichtung z und/oder in Längsrichtung x, und somit kontaktlos innerhalb der Zahnlücken der Verzahnung 118.1 angeordnet. Die Länge der Verriegelungsschnecke 128.2.1 kann beispielsweise in Abhängigkeit von der Anzahl der Zahnlücken der Verzahnung 118.1 und/oder in Abhängigkeit von einer maximalen Scherkraft im Hochlastfall eines Unfalls oder eines Crashs bestimmt sein. Insbesondere kann die Länge der Verriegelungsschnecke/n 128.2.1 in Abhängigkeit von der Länge und/oder sogenannten "Lastklassen" der Schienen 114, 116 angepasst sein oder werden.

Figur 6 zeigt eine vergrößerte Seitenansicht der Schienenanordnung 112 im Bereich des in der Oberschiene 114 innenliegenden Antriebsmoduls 128 mit einem überlagerten Kraft-/Hebel-Diagramm 200.

Das Antriebsrad 128.1 ist über die Federkraft der Vorspannfeder/n 136.1 spielfrei in die Verzahnung 118.1 (dargestellt in Figur 5) gedrückt.

Dabei kann sich das Vorspannelement 136 vom Gehäuseboden 128.4.3 durch das Gehäuse 128.4 hindurch und aus der Lagerausnehmung 128.10 heraus in Richtung der Unterseite der Oberschiene 114 erstrecken.

Die Vorspannfedern 136.1 sorgen für die Spielfreiheit des Zahnstangenantriebs, insbesondere des Antriebsrades 128.1 in der Verzahnung 118.1 (dargestellt in Figur 5). Hierbei drücken die Vorspannfedern 136.1 mit einer Kraft gemäß Pfeil 202 auf einen zugewandten Hebel 138 mit einem Drehpunkt im zentralen Drehlager 128.11 und übertragen ein daraus resultierendes Drehmoment gemäß Pfeil 204 auf einen abgewandten Hebel 140 zwischen dem Drehpunkt des zentralen Drehlagers 128.11 und einem Antriebsdrehpunkt des Antriebsrades 128.1.

Darüber hinaus kann über die mittels der Vorspannfedern 136.1 bewirkte Anfederung sichergestellt werden, dass das Antriebsrad 128.1 bei einer auf die Schienenanordnung 112 einwirkenden Überlast, insbesondere in Vertikalrichtung z, aus der Verzahnung 118.1 (auch Gegenverzahnung genannt) gedrückt wird. Hierbei rotiert die gesamte Antriebseinheit 128.3, insbesondere das Antriebsgehäuse 128.4, um den Drehpunkt im zentralen Drehlager 128.11. Die austreibende Kraft wird über Flankenwinkel der als Zahnstangenantrieb ausgebildeten Antriebseinheit 128.3 bewirkt.

Ebenfalls innerhalb der Verzahnung 118.1 befindet/befinden sich die eine/oder die mehreren Verriegelungsschnecke/n 128.2.1 (dargestellt in Figur 5). Die Verriegelungsschnecke 128.2.1 kann als eine eingängige oder mehrgängige Schnecke mit einem oder mehreren Schraubgewinde/n ausgebildet sein. Das jeweilige Schraubgewinde der Verriegelungsschnecke 128.2.1 kann innerhalb der Zahnlücken der Verzahnung 118.1 (auch Antriebsverzahnung genannt) mit dem Spiel 132 (dargestellt in Figur 5) liegen und somit kontaktlos und ohne Kontakt mit der Verzahnung 118.1 stehen. Andere Verriegelungselementausgestaltungen sind möglich.

Eine in Längsrichtung x wirkende Last oder Kraft kann über einen entsprechenden Eingriffswinkel, zum Beispiel von 20°, die in Vertikalrichtung z wirkende austreibende Kraft am Antriebsrad 128.1 bewirken. Während dieser Bewegung wird das Antriebsrad 128.1 an den geneigten Zahnflanken der Verzahnung 118.1 entlang bewegt. Hierbei legt die Oberschiene 114 bereits einen Längsweg in Längsrichtung x zurück.

Die Verriegelungsschnecke 128.2.1 bewegt sich bei den auftretenden Kräften eines Crashs einerseits durch diesen Längsweg in Längsrichtung x und zudem durch die Rotation der Antriebseinheit 128.3 um den Drehpunkt im zentralen Drehlager 128.11 auf die Verzahnung 118.1 zu, bis es zum Kontakt und zu einem Sperreingriff von Verriegelungsschnecke 128.2.1 und Verzahnung 118.1 kommt.

Die jeweilige Verriegelungsschnecke 128.2.1 kann selbsthemmend im Kontakt mit der Verzahnung 118.1 (auch Antriebsverzahnung genannt) ausgelegt sein, zum Beispiel durch eine entsprechende Lagerung und eine entsprechende Schneckensteigung. Die Crashlast wird dabei von der Oberschiene 114 über die Verriegelungsschnecke/n 128.2.1 auf die Unterschiene 116 übertragen.

Die Verriegelungsschnecke 128.2.1 und die als Gegenverzahnung ausgebildete Verzahnung 118.1 bilden eine Verriegelungseinheit bei einem Unfall.

Figur 7 zeigt eine teilaufgeschnittene Stirnseitenansicht der Schienenanordnung 112. Figur 8 zeigt eine vergrößerte Seitenansicht der Schienenanordnung 112 gemäß Figur 7 im Bereich des innenliegenden Antriebsmoduls 128 mit überlagerten Kräften gemäß Pfeile 206 bis 210.

Bei einem Unfall können hohe in Vertikalrichtung z auf die Schienenanordnung 112 (dargestellt in Figur 7), insbesondere die Oberschiene 114 (dargestellt in Figur 7), einwirkende Vertikalkräfte gemäß Pfeil 206 direkt über einen z-Anschlag 142 in der Oberschiene 114 und gemäß Pfeil 208 direkt über die Lagerbuchse 128.12 und gemäß Pfeil 210 über ein Lagerelement 128.5.2 (dargestellt unter anderem in Figur 8), zum Beispiel ein Zapfenlager, abgeleitet werden. Die jeweilige Verriegelungsschnecke 128.2.1 ragt aus der zugehörigen zweiten Ausnehmung 128.7 heraus und jeweils in das Oberschienenprofil der Oberschiene 114 hinein.

Figur 9 zeigt eine perspektivische Darstellung des Getriebes 128.5 des Antriebsmoduls 128.

Die Wellenausnehmung 128.3.2.3 ist eingerichtet, eine vom Antriebsmotor 128.3.1 abgehende Antriebswelle 128.3.2 mit einem Wellenspiel aufzunehmen. Die Antriebswelle 128.3.2 kann somit frei beweglich im Gehäuse 128.4 (dargestellt in Figur 4) gelagert sein.

Das Getriebe 128.5 kann mehrere, bevorzugt zumindest zwei, Getriebestufen umfassen. Die Gesamtübersetzungen von Antriebseinheit 128.3 (dargestellt in Figur 6), das heißt von Antriebsmotor 128.3.1 zu dem als Ritzel 128.1.1 (dargestellt in Figur 10) ausgebildeten Antriebsrad 128.1, und der Verriegelungseinheit, das von Antriebsmotor 128.3.1 zu Verriegelungsschnecken 128.2.1, sind so aufeinander abgestimmt, dass die lineare Vortriebsbewegung des Ritzels 128.1.1 mit der gleichen Geschwindigkeit erfolgt, wie die Vortriebsgeschwindigkeit der Verriegelungsschnecke 128.2.1, wobei die Verriegelungsschnecke 128.2.1 nicht antreibt, sondern wie zuvor beschrieben nur kontaktlos in der Verzahnung 118.1 (dargestellt in Figur 5) mitläuft. Die gleiche Geschwindigkeit ist notwendig, damit während einer normalen Sitzlängsverstellung nie Kontakt des Überlastelements 128.2 (auch Verriegelungselement genannt), insbesondere der Verriegelungsschnecke 128.2.1, mit der Verzahnung 118.1 auftritt. Der Sperreingriff erfolgt nur bei einem Unfall und somit bei einer einwirkenden Überlast.

Die Antriebswelle 128.3.2 kann mehrere Wellenabschnitte 128.3.2.1, 128.3.2.2 aufweisen. Das jeweilige Antriebsrad 128.1 ist mit dem ersten Wellenabschnitt 128.3.2.1 bewegungsgekoppelt.

Das jeweilige Überlastelement 128.2 ist mit dem zweiten Wellenabschnitt 128.3.2.2 bewegungsgekoppelt.

Das Getriebe 128.5 koppelt den ersten Wellenabschnitt 128.3.2.1 mit den Antriebsrädern 128.1 und den zweiten Wellenabschnitt 128.3.2.2 mit den Überlastelementen 128.2.

Das Antriebsmodul 128 kombiniert somit die als Zahnstangenantrieb ausgebildete Antriebseinheit 128.3 mit dem einzigen Antriebsmotor 128.3.1 mit den als Verriegelungsmechanik oder als Verriegelungseinheit ausgebildeten Überlastelementen 128.2.

Die Antriebseinheit 128.3 umfasst eine auf die Antriebswelle 128.3.2 formschlüssig, insbesondere aufgepresste oder aufgesteckte, Antriebsschnecke 128.3.3.

Die Antriebsschnecke 128.3.3 steht für eine Längsverstellung im Wirkzusammenhang mit einem Schneckenradgetriebe aus zwei Abtriebsschneckenrädern 128.15, die senkrecht zueinander und in Wirkzusammenhang mit den Ritzeln 128.1.1 stehen.

Das Getriebe 128.5 umfasst Lagerelemente 128.5.1, 128.5.2 für die Überlastelemente 128.2. Ein erstes Lagerelement 128.5.1 für die beiden Überlastelemente 128.2 kann gleichzeitig als Abstützlager für das/die Vorspannelement/e 136, insbesondere die Vorspannfeder/n 136.1, ausgebildet sein. Ein in Längsrichtung x zum ersten Lagerelement 128.5.1 gegenüberliegendes zweites Lagerelement 128.5.2 kann beispielsweise als ein Zapfenlager für die Überlastelemente 128.2 ausgebildet sein. Die Lagerelemente 128.5.1 und 128.5.2 halten die Überlastelemente 128.1, 128.2 in Position. Das Gehäuse 128.4 kann insbesondere ein Druckgussgehäuse, zum Beispiel ein Zinkdruckgussgehäuse, sein.

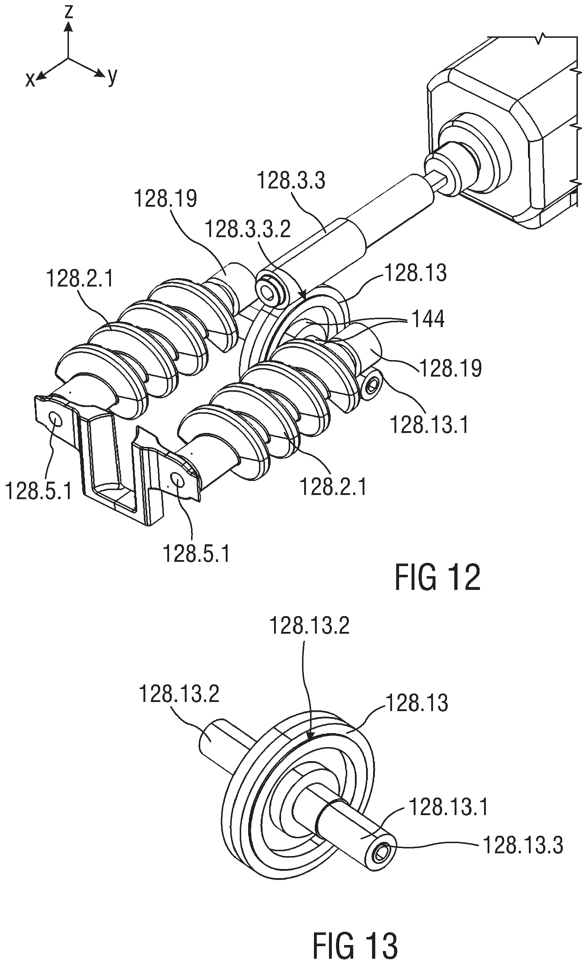

Das Überlastschneckenrad 128.13 ist im Gehäuse 128.4 zweistellig gelagert. Auf dem Überlastschneckenrad 128.13 sind zwei Unterschnecken 138.13.1, 128.13.2 (dargestellt in Figur 13) angeordnet, die im kämmenden Eingriff mit Schneckenrädern 128.19 der Überlastelemente 128.1, 128.2 stehen.

Das jeweilige Überlastelemente 128.2, insbesondere die jeweilige Verriegelungsschnecke 128.2.1, weisen in Längsrichtung x gesehen jeweils am vom Antriebsmotor 128.3.1 abgewandten Ende entsprechende Lagerbuchsen 128.14 und auf dem zum Antriebsmotor 128.3.1 zugewandten Ende Schneckenräder 128.19 auf.

Figur 10 zeigt eine vergrößerte perspektivische Darstellung des Antriebsmoduls 128 im Bereich der Antriebsräder 128.1.

Nebenstehend zunächst die Antriebseinheit 128.3 (dargestellt in Figur 4). Auf die Antriebswelle 128.3.2 ist die Antriebsschnecke 128.3.3 aufgepresst oder mit dieser formschlüssig verbunden.

Ein erster Schneckenabschnitt 128.3.3.1 dieser Antriebsschnecke 128.3.3 steht in Wirkzusammenhang mit einem ersten Abtriebsschneckenrad 128.15.1. Dieses erstes Abtriebsschneckenrad 128.15.1 kann Teil eines Getriebeelements 128.16 sein, das dieses erste Abtriebsschneckenrad 128.15.1 mit einer weiteren Schnecke 128.17 kombiniert. Diese weitere Schnecke 128.17 treibt wiederum ein zweites Abtriebsschneckenrad 128.15.2 an, welches die Bewegung auf die als Ritzel 128.1.1 ausgebildeten Antriebsräder 128.1 überträgt.

Hierfür verfügt das zweite Abtriebsschneckenrad 128.15.2 über die Antriebsschnittstelle 128.8 für die zum Beispiel formschlüssige Verbindung mit den Ritzeln 128.1.1 (auch Antriebsritzel genannt).

Figur 11 zeigt eine perspektivische Darstellung eines der Abtriebsschneckenräder 128.15, insbesondere des zweiten Abtriebsschneckenrades 128.15.2 mit der Antriebsschnittstelle 128.8.

Die in dem Antriebsmodul 128 über die Vorspannfedern 136.1 (dargestellt in Figur 9) auf die Ritzel 128.1.1 (dargestellt in Figur 9) wirkenden hohen Lagerkräfte werden von weiteren Lagerbuchsen 128.18 aufgenommen. Alternativ können für eine weitere Effizienzerhöhung Kugellager statt die weiteren Lagerbuchsen 128.18 vorgesehen sein. Die weiteren Lagerbuchsen 128.18 für die Antriebsräder 128.1 (dargestellt in Figur 3) und die Lagerbuchsen 128.12 (dargestellt in Figur 8) für die Verriegelungsschnecken 128.2.1 (dargestellt in Figur 4) können jeweils als Kunststofflagerbuchsen ausgebildet sein.

Das Getriebe 128.5 (dargestellt in Figur 9) mit der als weiteres Schneckenrad oder als Schnecke ausgebildeten Antriebsschnecke 128.3.3 (dargestellt in Figur 9) und den mit diesen zusammenwirkenden Abtriebsschneckenrädern 128.15 und der weiteren Schnecke 128.17 (dargestellt in Figur 9 und 10) kann beispielsweise eine Übersetzung von i=115 aufweisen.

Figur 12 zeigt eine vergrößerte perspektivische Darstellung des Antriebsmoduls 128 (dargestellt in Figur 4) im Bereich einer Überlastmechanik mit zugehörigen Getriebestufen und des Überlastelements 128.2 (dargestellt in Figur 4). Figur 13 zeigt eine perspektivische Darstellung eines Getriebegliedes, umfassend das Überlastschneckenrad 128.13 und Schneckenräder 128.19 für den Antrieb der als Verriegelungsschnecken 128.2.1 ausgebildeten Überlastelemente 128.1, 128.2.

Der Antrieb der beispielsweise als Verriegelungsschnecken 128.2.1 (dargestellt in Figur 4) ausgebildeten Verriegelungselemente oder Überlastelemente 128.2 (dargestellt in Figur 3), welche kontaktlos innerhalb der Verzahnung 118.1 (dargestellt in Figur 3) laufen, erfolgt über Getriebeglieder. Die Gesamtübersetzung von der Antriebswelle 128.3.2 zu Verriegelungsschneckenachsen kann beispielsweise i=192 betragen. Diese Gesamtübersetzung zusammen mit der Steigung der Verriegelungsschnecken 128.2.1 ermöglicht die auf die Ritzel 128.1.1 (dargestellt in Figur 9) abgestimmte synchrone Schraubbewegung der Verriegelungsschnecken 128.2.1.

Die mit der Antriebswelle 128.3.2 (dargestellt in Figur 9) verbundenen Antriebsschnecke 128.3.3 (dargestellt in Figur 9) verfügt über einen zweiten Schneckenabschnitt 128.3.3.2 (dargestellt in Figur 12), welcher in Kontakt mit dem Überlastschneckenrad 128.13 steht. Vorzugsweise ist die Schneckenzahngeometrie für beide Schneckenräder, Antriebsschnecke 128.3.3 (auch Antriebsschneckenrad genannt) und Überlastschneckenrad 128.13 gleich. Es handelt sich wiederum um ein kombiniertes Getriebeelement, welches beispielsweise aus der Antriebsschnecke 128.3.3 und dem vorgenannten Überlastschneckenrad 128.13 und linksseitig und rechtseitig befindlichen Unterschnecken 128.13.1 und 128.13.2 gebildet ist.

Auf dem Überlastschneckenrad 128.13 sind die zwei Unterschnecken 138.13.1, 128.13.2 angeordnet, die im kämmenden Eingriff mit den Schneckenrädern 128.19 der Überlastelemente 128.1, 128.2 (dargestellt in Figur 9) stehen. Die Überlastmechanik weist zwei Lagerungen auf. Eine erste Lagerung 128.13.2 ist für das Überlastschneckenrad 128.13 selbst vorgesehen, das im kämmenden Eingriff mit der Antriebsschnecke 128.3.3 (dargestellt in Figur 9) steht, und eine zweite Lagerung 128.13.3 ist für die Unterschnecken 128.13.1 und 128.13.2 vorgesehen, die im kämmenden Eingriff mit den Schneckenrädern 128.19 stehen (dargestellt in Figur 9).

Ein idealer Achsabstand zwischen den Unterschnecken 128.13.1 kann somit über die zweistellige Lagerung des Überlastschneckenrades 128.13 und die Lagerungspunkte der Überlastelemente 128.1, 128.2 eingestellt werden.

Die linksseitigen und rechtseitigen Unterschnecken 128.13.1, 128.13.2 übertragen ihre Drehbewegung auf die Schneckenräder 128.19 (dargestellt in Figur 9) der baugleichen linken und rechten Verriegelungsschnecke 128.2.1. Das jeweilige Schneckenrad 128.19 kann hierbei direkt Bestandteil der zugehörigen Verriegelungsschnecken 128.2.1 sein. Diese können zum Beispiel aus einem Stahlmaterial oder einem Zink-Druckgussmaterial gefertigt sein. Alternativ können die Schneckenräder 128.19 separat jeweils als ein Zusatzteil ausgebildet sein, das an der jeweiligen Verriegelungsschnecke 128.2.1 befestigt ist.

Das Getriebe 128.5 (dargestellt in Figur 9) und deren zuvor beschriebenen Komponenten sind direkt im Gehäuse 128.4 (dargestellt in Figur 4) angeordnet und gelagert.

Die Montage und Lagerung der Verriegelungsschnecken 128.2.1 wird im dargestellten Ausführungsbeispiel über die Lagerelemente 128.5.1, 128.5.2, insbesondere Kunststofflagerelemente, ermöglicht. Das Gehäuse 128.4 ist zweiteilig, zum Beispiel aus zwei zusammengesetzten Gehäusehälften 128.4.4 und 128.4.5, gebildet, wie in Figur 4 gezeigt.

Durch Einsatz der Lagerelemente 128.5.1, 128.5.2 können die Gehäusehälften 128.4.4 und 128.4.5 einfach gestaltet über einfache Auf-Zu-Werkzeuge hergestellt werden, insbesondere als ein Kunststoffgehäuse mit Metallverstärkungen oder als ein komplettes Metallgehäuse, zum Beispiel aus Zamak. Dabei können zusätzliche Lagerungsstifte entfallen.

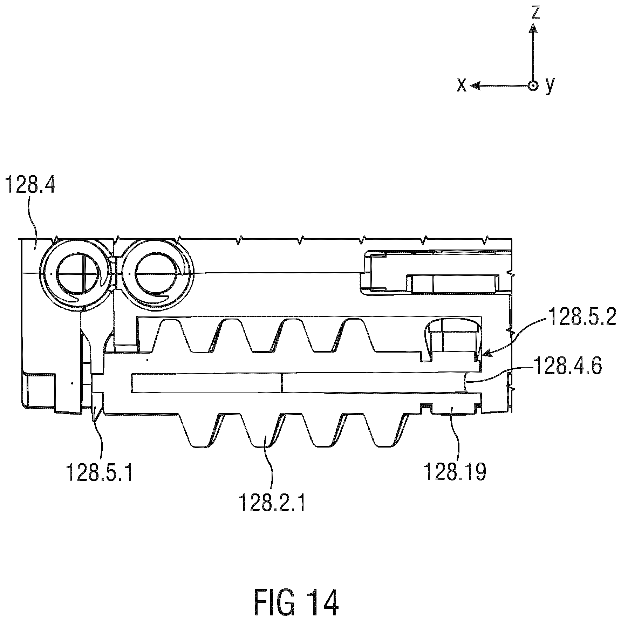

Figur 14 zeigt eine Schnittdarstellung des Antriebsmoduls 128 (dargestellt in Figur 3) im Bereich des Überlastelements 128.2 (dargestellt in Figur 3).

Auf der den Schneckenrädern 128.19 zugewandten Seite ist die Verriegelungsschnecke 128.2.1 direkt im Gehäuse 128.4 gelagert, hierfür ist als zweites Lagerelement 128.5.2 ein Lagerungsfortsatz 128.4.6 an der jeweiligen Gehäusehälfte 128.4.4, 128.4.5 des Gehäuses 128.4 vorgesehen, dargestellt in Figur 4.

Bei der Vormontage der jeweiligen Gehäusehälften 128.4.4 und 128.4.5 werden die Verriegelungsschnecken 128.2.1 zuerst vor dem Lagerungsfortsatz 128.4.6 des zweiten Lagerelements 128.5.2 positioniert und auf diese geschoben und dann am anderen Ende in die Lagerelemente 128.5.1, 128.5.2 (in Figur 9 dargestellt) eingeklipst.

Die Lagerelemente 128.5.1, 128.5.2 können filigran ausgeführt sein, da die in den Lagerstellen der Verriegelungsschnecken 128.2.1 wirkenden Kräfte bei Normalbetrieb gering sind. Die hohen Kräfte bei einem Unfall werden nach Versagen der Lagerstellen über Kontakt der Verriegelungsschnecken 128.2.1 mit dem Gehäuse 128.4 übertragen.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 114.1: Längsseite
- 116: Zweites Schienenelement (Unterschiene)
- 116.1: Längsseite
- 118: Zahnelement
- 118.1: Verzahnung (Gegenverzahnung)

- 120: Hohlraum
- 122: Zusammenwirkungsbereich
- 124: Befestigungselement
- 126: Anschlussöffnung
- 128: Antriebsmodul
- 128.1: Antriebsrad
- 128.1.1: Ritzel
- 128.2: Überlastelement
- 128.2.1: Verriegelungsschnecke
- 128.3: Antriebseinheit
- 128.3.1: Antriebsmotor
- 128.3.2: Antriebswelle
- 128.3.2.1, 128.3.2.2: Wellenabschnitt
- 128.3.2.3: Wellenausnehmung
- 128.3.3: Antriebsschnecke
- 128.3.3.1, 128.3.3.2: Schneckenabschnitt
- 128.4: Gehäuse
- 128.4.1: Trägerverlängerung
- 128.4.2: Auflagefläche
- 128.4.3: Gehäuseboden
- 128.4.4, 128.4.5: Gehäusehälfte
- 128.4.6: Lagerungsfortsatz
- 128.5: Getriebe
- 128.5.1, 128.5.2: Lagerelement
- 128.6: erste Ausnehmung
- 128.7: zweite Ausnehmung
- 128.8: Antriebsschnittstelle
- 128.9: Oberseite
- 128.10: Lagerausnehmung
- 128.11: Drehlager
- 128.12: Lagerbuchse
- 128.13: Überlastschneckenrad
- 128.13.1: Unterschnecke
- 128.14: weitere Lagerbuchse
- 128.15: Abtriebsschneckenrad
- 128.15.1: erstes Abtriebsschneckenrad
- 128.15.2: zweites Abtriebsschneckenrad
- 128.16: Getriebeelement
- 128.17: weitere Schnecke
- 128.18: weitere Lagerbuchse
- 128.19: Schneckenrad

- 130: kämmender Eingriff
- 132: Spiel
- 134: Vormontagemodul
- 136: Vorspannelement
- 136.1: Vorspannfeder
- 138: Hebel
- 140: Hebel
- 142: z-Anschlag

- 200: Kraft-/Hebel-Diagramm
- 202: Pfeil
- 204: Pfeil
- 206: Pfeil
- 208: Pfeil
- 210: Pfeil

- x: Längsrichtung
- y: Querrichtung
- z: Vertikalrichtung

## Patentansprüche

1. Antriebsmodul (128), umfassend:
- eine Antriebseinheit (128.3) mit einem einzelnen Antriebsmotor (128.3.1), der eine Antriebswelle (128.3.2) mit mehreren Wellenabschnitten (128.3.2.1, 128.3.2.2) umfasst, mit mindestens einem Antriebsrad (128.1), das mit einem ersten Wellenabschnitt (128.3.2.1) bewegungsgekoppelt ist,
- mindestens ein Getriebe (128.5) und
- mindestens ein Überlastelement (128.2), das mit einem zweiten Wellenabschnitt (128.3.2.2) bewegungsgekoppelt ist,
wobei das Getriebe (128.5) den ersten Wellenabschnitt (128.3.2.1) mit dem Antriebsrad (128.1) und den zweiten Wellenabschnitt (128.3.2.2) mit dem Überlastelement (128.2) koppelt.

2. Antriebsmodul (128) nach Anspruch 1,
umfassend ein Gehäuse (128.4), in welchem das Getriebe (128.5) angeordnet ist und an welchem zumindest teilweise außen das Antriebsrad (128.1) frei beweglich und das Überlastelement (128.2) frei beweglich gelagert sind.

3. Antriebsmodul (128) nach Anspruch 2,
wobei das Gehäuse (128.4) an einer Längsseite mindestens eine erste Ausnehmung (128.6) für das Antriebsrad (128.1) und mindestens eine zweite Ausnehmung (128.7) für das Überlastelement (128.2) aufweist.

4. Antriebsmodul (128) nach Anspruch 2 oder 3,
wobei das Gehäuse (128.4) auf einer Oberseite (128.9) mindestens eine Lagerausnehmung (128.10) aufweist.

5. Antriebsmodul (128) nach einem der Ansprüche 2 bis 4,
wobei der Antriebsmotor (128.3.1) und das Gehäuse (128.4) sich in Längsrichtung (x) des Antriebsmoduls (128) erstrecken und hintereinander angeordnet sind.

6. Antriebsmodul (128) nach Anspruch 5,
wobei das Gehäuse (128.4) an mindestens einer seiner Gehäusestirnwänden mindestens eine Ausnehmung für die Antriebswelle (128.3.2) aufweist.

7. Antriebsmodul (128) nach einem der vorhergehenden Ansprüche,
wobei das Gehäuse (128.4) ein Drehlager (128.11) umfasst.

8. Antriebsmodul (128) nach Anspruch 7,
wobei das Drehlager (128.11) als mindestens eine zentrale Lagerbuchse (128.12) ausgebildet ist, die senkrecht von einer der Längsseiten des Gehäuses (128.4) nach außen abragt.

9. Antriebsmodul (128) nach einem der vorhergehenden Ansprüche,
wobei das Überlastelement (128.2) als eine Verriegelungsschnecke (128.2.1) ausgebildet ist.

10. Längsverstelleinrichtung (110), die zumindest eine Schienenanordnung (112) mit einer festen Unterschiene (116) und einer zur Unterschiene (116) verstellbaren Oberschiene (114) und mindestens ein mit der Schienenanordnung (112) koppelbares oder gekoppeltes Antriebsmodul (128) nach einem der vorhergehenden Ansprüche umfasst.

11. Längsverstelleinrichtung (110) nach Anspruch 10,
wobei das Antriebsmodul (128) vollständig in einem zwischen der Unterschiene (116) und der Oberschiene (114) gebildeten Hohlraum (120) angeordnet und an der Oberschiene (114) gelagert ist.

12. Längsverstelleinrichtung (110) nach Anspruch 10 oder 11,
wobei das Antriebsrad (128.1) spielfrei in einem Zahnelement (118) der Unterschiene (116) gelagert ist.

13. Längsverstelleinrichtung (110) nach Anspruch 12,
wobei das Überlastelement (128.2) mit einem Spiel (132) in einer Verzahnung (118.1) des Zahnelements (118) der Unterschiene (116) liegt.

14. Längsverstelleinrichtung (110) nach einem der Ansprüche 10 bis 13, wobei ein Gehäuse (128.4) des Antriebsmoduls (128) gegenüber der Oberschiene (114) vorgespannt und/oder drehbar an der Oberschiene (114) gelagert ist.

15. Fahrzeugsitz (100) mit einer Längsverstelleinrichtung (110) nach einem der Ansprüche 10 bis 14.
